(19) Europäisches Patentamt
European Patent Office
Office européen des brevets

(11) **EP 4 572 173 A1**

(12) **EUROPEAN PATENT APPLICATION**
published in accordance with Art. 153(4) EPC

(43) Date of publication:
**18.06.2025 Bulletin 2025/25**

(21) Application number: 23864671.5

(22) Date of filing: **11.09.2023**

(51) International Patent Classification (IPC):
***H04B 7/06*** (2006.01)     ***H04L 5/00*** (2006.01)

(52) Cooperative Patent Classification (CPC):
**H04B 7/06; H04B 17/30; H04B 17/345; H04L 5/00;
H04W 24/02**

(86) International application number:
**PCT/CN2023/118102**

(87) International publication number:
**WO 2024/055939 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 CN 202211117025**

(71) Applicant: **Huawei Technologies Co., Ltd.
Shenzhen, Guangdong 518129 (CN)**

(72) Inventors:
• **YANG, Pei
  Shenzhen, Guangdong 518129 (CN)**
• **LI, Tie
  Shenzhen, Guangdong 518129 (CN)**
• **YU, Zheng
  Shenzhen, Guangdong 518129 (CN)**
• **LIU, Jianghua
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **MEASUREMENT RESOURCE CONFIGURATION METHOD AND APPARATUS**

(57)    A measurement resource configuration method and an apparatus are applicable to a scenario in which coherent joint transmission CJT is introduced. The method includes: A network device sends first configuration information to a terminal device, to configure a channel measurement resource set for the terminal device, where the channel measurement resource set includes at least one channel measurement resource. After receiving the first configuration information, the terminal device determines channel state information CSI, and sends the CSI to the network device. The CSI is associated with a first group of channel measurement resources and a second group of channel measurement resources in the channel measurement resource set. The first group of channel measurement resources is used for channel measurement, the second group of channel measurement resources is used for interference measurement, and the first group of channel measurement resources is different from the second group of channel measurement resources. Based on this solution, the terminal device considers interference in a same resource set when determining the CSI. This can improve accuracy of the CSI. In addition, the network device does not need to additionally configure a resource used for interference measurement. This can reduce resource overheads.

FIG. 5

## Description

This application claims priority to Chinese Patent Application No. 202211117025.0, filed with the China National Intellectual Property Administration on September 14, 2022 and entitled "MEASUREMENT RESOURCE CONFIGURATION METHOD AND APPARATUS", which is incorporated herein by reference in its entirety.

## TECHNICAL FIELD

Embodiments of this application relate to the communication field, and in particular, to a measurement resource configuration method and an apparatus.

## BACKGROUND

Coherent joint transmission (coherent joint transmission, CJT) is a multi-transmission reception point (transmission reception point, TRP) transmission technology. Based on the CJT technology, an increase in a quantity of antennas can bring a beamforming gain, an increase in a quantity of TRPs can bring a power gain, and interference control is more flexible, so that average communication performance of a cell and communication performance at a cell edge can be significantly improved.

In CJT transmission, one of a plurality of TRPs may send one piece of downlink control information (downlink control information, DCI) to a terminal device, and the DCI schedules one physical downlink shared channel (physical downlink shared channel, PDSCH). The plurality of TRPs send each layer of data of the PDSCH to the terminal device. That is, in CJT transmission, the plurality of TRPs may simultaneously send same data to the terminal device.

Measurement of channel and interference is particularly important in CJT transmission. However, currently, the industry has no related design on measurement resource configuration in CJT transmission.

## SUMMARY

This application provides a measurement resource configuration method and an apparatus, to properly configure a measurement resource and improve accuracy of channel state information CSI.

According to a first aspect, a measurement resource configuration method is provided. The method may be performed by a terminal device, may be performed by a component of the terminal device, such as a processor, a chip, or a chip system of the terminal device, or may be implemented by a logical module or software that can implement all or some functions of the terminal device. The method includes:

receiving first configuration information from a network device, determining channel state information CSI, and sending the CSI to the network device. The first configuration information is used to configure a channel measurement resource set, the channel measurement resource set includes M channel measurement resources, and M is a positive integer. The CSI is associated with a first group of channel measurement resources and a second group of channel measurement resources in the channel measurement resource set. The first group of channel measurement resources is used for channel measurement, the second group of channel measurement resources is used for interference measurement, and the first group of channel measurement resources is different from the second group of channel measurement resources.

Based on this solution, for the M channel measurement resources configured by the network device, the terminal device may perform channel measurement by using the first group of channel measurement resources, perform interference measurement by using the second group of channel measurement resources, and report the CSI related to channel measurement and interference measurement to the network device. That is, the terminal device considers interference in a same resource set when determining the CSI, so that accuracy of the CSI can be improved. In this way, the network device can subsequently perform proper scheduling based on the CSI, and impact of a TRP associated with the second group of channel measurement resources in the resource set on subsequent transmission is reduced. In addition, because interference measurement in a TRP coordinated set corresponding to the resource set can be performed by using the second group of channel measurement resources, the network device does not need to additionally configure a resource used for interference measurement in the coordinated set. This can reduce resource overheads.

In a possible design, the method further includes: receiving first indication information from the network device. The first indication information indicates that the channel measurement resource set is available for interference measurement; or the first indication information indicates that the second group of channel measurement resources is available for interference measurement.

Based on the possible design, the network device indicates, to the terminal device, that the channel measurement resource set or the second group of channel measurement resources is available for interference measurement, so that the terminal device can perform interference measurement on the second group of channel measurement resources based on the indication of the network device, to improve accuracy of the CSI.

In a possible design, the method further includes: sending second indication information to the network device. The second indication information indicates that the channel measurement resource set is used for channel measurement and interference measurement; or the second indication information indicates that the second group of channel measurement resources is used for interference measurement.

Based on the possible design, the network device can learn, by using the second indication information, that the second group of channel measurement resources is used for interference measurement, to learn that interference in the coordinated set is considered in the CSI reported by the terminal device, so that proper scheduling can be performed based on the CSI.

In a possible design, the CSI includes first CSI and difference information. The first CSI is associated with the first group of channel measurement resources, the difference information indicates a difference between the first CSI and second CSI, and the second CSI is associated with the first group of channel measurement resources and the second group of channel measurement resources. Alternatively, the first CSI is associated with the first group of channel measurement resources and the second group of channel measurement resources, the difference information indicates a difference between the first CSI and second CSI, and the second CSI is associated with the first group of channel measurement resources.

Based on the possible design, the network device can learn of CSI derived when interference measurement is not performed in the coordinated set and CSI derived when interference measurement is performed in the coordinated set, so that the network device learns of more information, and the network device performs scheduling more properly based on reporting of the terminal device.

In a possible design, the method further includes: receiving second configuration information from the network device. The second configuration information is used to configure one interference measurement resource associated with the channel measurement resource set. Alternatively, the second configuration information is used to configure one interference measurement resource set associated with the channel measurement resource set.

Based on the possible design, the network device configures one associated interference measurement resource for the channel measurement resource set. For various measurement hypotheses of the terminal device, the interference measurement resource may be used to perform interference measurement on a cell outside the coordinated set, so that overheads of the interference measurement resource can be greatly reduced.

In a possible design, the interference measurement resource set includes one interference measurement resource.

In a possible design, the interference measurement resource is a channel state information-interference measurement CSI-IM resource.

In a possible design, the CSI is further associated with the interference measurement resource or the interference measurement resource set. Based on the possible design, when determining the CSI, the terminal device further considers interference outside the coordinated set, so that accuracy of the CSI can be further improved.

According to a second aspect, a measurement resource configuration method is provided. The method may be performed by a network device, may be performed by a component of the network device, such as a processor, a chip, or a chip system of the network device, or may be implemented by a logical module or software that can implement all or some functions of the network device. The method includes:
sending first configuration information to a terminal device, and receiving channel state information CSI from the terminal device. The first configuration information is used to configure a channel measurement resource set, the channel measurement resource set includes M channel measurement resources, and M is a positive integer. The CSI is associated with a first group of channel measurement resources and a second group of channel measurement resources in the channel measurement resource set. The first group of channel measurement resources is used for channel measurement, the second group of channel measurement resources is used for interference measurement, and the first group of channel measurement resources is different from the second group of channel measurement resources.

Based on this solution, the network device configures the M channel measurement resources for the terminal device. The first group of channel measurement resources is used for channel measurement, and the second group of channel measurement resources is used for interference measurement. That is, the terminal device considers interference in a same resource set when determining the CSI, so that accuracy of the CSI can be improved. In this way, the network device can subsequently perform proper scheduling based on the CSI, and impact of a TRP associated with the second group of channel measurement resources in the resource set on subsequent transmission is reduced. In addition, because interference measurement in a TRP coordinated set corresponding to the resource set can be performed by using the second group of channel measurement resources, the network device does not need to additionally configure a resource used for interference measurement in the coordinated set. This can reduce resource overheads.

In a possible design, the method further includes: sending first indication information to the terminal device. The first indication information indicates that the channel measurement resource set is available for interference measurement; or the first indication information indicates that the second group of channel measurement resources is available for interference measurement.

In a possible design, the method further includes: receiving second indication information from the terminal device. The second indication information indicates that the channel measurement resource set is used for channel measurement and interference measurement; or the second indication information indicates that the second group of channel measurement resources is used for interference measurement.

In a possible design, the CSI includes first CSI and difference information. The first CSI is associated with the first group of channel measurement resources, the difference information indicates a difference between the first CSI and second CSI, and the second CSI is associated with the first group of channel measurement resources and the second group of channel measurement resources. Alternatively, the first CSI is associated with the first group of channel measurement resources and the second group of channel measurement resources, the difference information indicates a difference between the first CSI and second CSI, and the second CSI is associated with the first group of channel measurement resources.

In a possible design, the method further includes: sending second configuration information to the terminal device. The second configuration information is used to configure one interference measurement resource associated with the channel measurement resource set. Alternatively, the second configuration information is used to configure one interference measurement resource set associated with the channel measurement resource set.

In a possible design, the interference measurement resource set includes one interference measurement resource.

In a possible design, the interference measurement resource is a channel state information-interference measurement CSI-IM resource.

In a possible design, the CSI is further associated with the interference measurement resource or the interference measurement resource set.

For technical effects brought by any possible design of the second aspect, refer to the technical effects brought by corresponding designs of the first aspect. Details are not described herein again.

According to a third aspect, a communication apparatus is provided to implement various methods. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to the functions.

In some possible designs, the communication apparatus may include a processing module and a transceiver module. The processing module may be configured to implement a processing function in any one of the foregoing aspects and the possible implementations thereof. The transceiver module may include a receiving module and a sending module, respectively configured to implement a receiving function and a sending function in any one of the foregoing aspects and the possible implementations thereof.

In some possible designs, the transceiver module may include a transceiver circuit, a transceiver machine, a transceiver, or a communication interface.

When the communication apparatus is the terminal device in the first aspect or the apparatus included in the terminal device,

in some possible designs, the transceiver module is configured to receive first configuration information from a network device. The first configuration information is used to configure a channel measurement resource set, the channel measurement resource set includes M channel measurement resources, and M is a positive integer. The processing module is configured to determine channel state information CSI. The CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources. The transceiver module is further configured to send the CSI to the network device.

In a possible design, the transceiver module is further configured to receive first indication information from the network device. The first indication information indicates that the channel measurement resource set is available for interference measurement; or the first indication information indicates that the second group of channel measurement resources is available for interference measurement.

In some possible designs, the transceiver module is further configured to send second indication information to the network device. The second indication information indicates that the channel measurement resource set is used for channel measurement and interference measurement; or the second indication information indicates that the second group of channel measurement resources is used for interference measurement.

In some possible designs, the transceiver module is further configured to receive second configuration information from the network device. The second configuration information is used to configure one interference measurement resource associated with the channel measurement resource set, or the second configuration information is used to configure one interference measurement resource set associated with the channel measurement resource set.

When the communication apparatus is the network device in the second aspect or the apparatus included in the network device,

the processing module is configured to determine first configuration information. The transceiver module is configured to send the first configuration information to a terminal device. The first configuration information is used to configure a channel measurement resource set, the channel measurement resource set includes M channel measurement resources, and M is a positive integer. The transceiver module is further configured to receive channel state information CSI from the terminal device. The CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources.

In some possible designs, the transceiver module is further configured to send first indication information to the terminal device. The first indication information indicates that the channel measurement resource set is available for interference measurement; or the first indication information indicates that the second group of channel measurement resources is available for interference measurement.

In some possible designs, the transceiver module is further configured to receive second indication information from the terminal device. The second indication information indicates that the channel measurement resource set is used for channel measurement and interference measurement; or the second indication information indicates that the second group of channel measurement resources is used for interference measurement.

In some possible designs, the transceiver module is further configured to send second configuration information to the terminal device. The second configuration information is used to configure one interference measurement resource associated with the channel measurement resource set, or the second configuration information is used to configure one interference measurement resource set associated with the channel measurement resource set.

According to a fourth aspect, a communication apparatus is provided, and includes a processor and a memory. The memory is configured to store computer instructions. When the processor executes the instructions, the communication apparatus is enabled to perform the method according to any one of the foregoing aspects. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a sixth aspect, a communication apparatus is provided, and includes at least one processor. The processor is configured to execute a computer program or instructions stored in a memory, so that the communication apparatus performs the method according to any one of the foregoing aspects. The memory may be coupled to the processor, or may be independent of the processor. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a seventh aspect, a computer-readable storage medium is provided. The computer-readable storage medium stores a computer program or instructions. When the computer program or the instructions are executed on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

According to a ninth aspect, a communication apparatus (for example, the communication apparatus may be a chip or a chip system) is provided. The communication apparatus includes a processor, configured to implement the function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that when the communication apparatus provided in any one of the third aspect to the ninth aspect is a chip, a sending action/function of the communication apparatus may be understood as outputting information, and a receiving action/function of the communication apparatus may be understood as inputting information.

For technical effects brought by any design manner of the third aspect to the ninth aspect, refer to the technical effects brought by different design manners of the first aspect or the second aspect. Details are not described herein again.

## BRIEF DESCRIPTION OF DRAWINGS

FIG. 1 is a diagram of a coherent joint transmission CJT scenario according to this application;

FIG. 2 is a diagram of a non-coherent joint transmission NCJT scenario according to this application;

FIG. 3 is a diagram of measurement resource configuration in an NCJT scenario according to this application;

FIG. 4 is a diagram of a structure of a communication system according to this application;

FIG. 5 is a schematic flowchart of a measurement resource configuration method according to this application;

FIG. 6 is a diagram of a channel measurement resource usage method in a CJT scenario according to this application;

FIG. 7 is a schematic flowchart of another measurement resource configuration method according to this application;

FIG. 8 is a diagram of a structure of a communication apparatus according to this application;

FIG. 9 is a diagram of a structure of another communication apparatus according to this application; and

FIG. 10 is a diagram of a structure of still another communication apparatus according to this application.

## DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that, an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, reference may be made to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding of the technical solutions in embodiments of this application, technologies related to this application are first briefly described as follows:

1. Coherent joint transmission (coherent joint transmission, CJT):
The CJT is a multi-transmission reception point (transmission reception point, TRP) transmission technology, and is applicable to a densely deployed cellular network with a large traffic volume. In CJT transmission, a plurality of TRPs may simultaneously send same data to a terminal device.

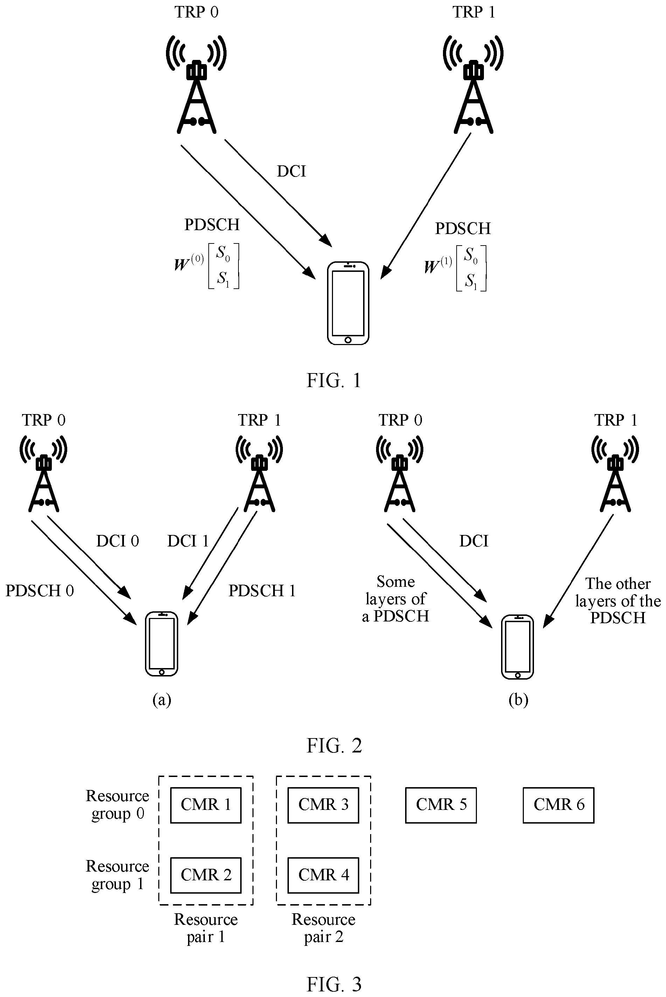

For example, as shown in FIG. 1, two TRPs (a TRP 0 and a TRP 1) participate in CJT transmission. One of the two TRPs sends downlink control information (downlink control information, DCI) to the terminal device, to schedule a physical downlink shared channel (physical downlink shared channel, PDSCH). Each layer of data of the PDSCH is sent by the TRP 0 and the TRP 1.

For example, assuming that the PDSCH includes two layers of data: $S_0$ and $S_1$, and precoding matrices used by the TRP 0 and the TRP 1 are respectively $\boldsymbol{W}^{(0)}$ and $\boldsymbol{W}^{(1)}$, a signal sent by the TRP 0 may be represented as:

$$\boldsymbol{W}^{(0)}\begin{bmatrix} S_0 \\ S_1 \end{bmatrix} = \begin{bmatrix} W_{0,0} & W_{0,1} \\ W_{1,0} & W_{1,1} \\ \vdots & \vdots \\ W_{N-1,0} & W_{N-1,1} \end{bmatrix}\begin{bmatrix} S_0 \\ S_1 \end{bmatrix}.$$

N indicates a quantity of antennas. A signal sent by the TRP 1 may be represented as:

$$\boldsymbol{W}^{(1)}\begin{bmatrix} S_0 \\ S_1 \end{bmatrix} = \begin{bmatrix} W_{N,0} & W_{N,1} \\ W_{N+1,0} & W_{N+1,1} \\ \vdots & \vdots \\ W_{2N-1,0} & W_{2N-1,1} \end{bmatrix}\begin{bmatrix} S_0 \\ S_1 \end{bmatrix}.$$

After the signals sent by the TRP 0 and the TRP 1 are transmitted through a channel, a signal received by the receiving end may be represented as:

$$y = \begin{bmatrix} \boldsymbol{H}_0 & \boldsymbol{H}_1 \end{bmatrix}\begin{bmatrix} \boldsymbol{W}^{(0)} \\ \boldsymbol{W}^{(1)} \end{bmatrix}\begin{bmatrix} S_0 \\ S_1 \end{bmatrix} + N_0.$$

$\boldsymbol{H}_0$ is a channel matrix between the TRP 0 and the terminal device, and $\boldsymbol{H}_1$ is a channel matrix between the TRP 1 and the terminal device. $N_0$ is noise.

2. Non-coherent joint transmission (non-coherent joint transmission, NCJT):

The NCJT is also a multi-TRP transmission technology, and is introduced in Release 16 (Release-16) of new radio (new radio, NR). The NCJT may be classified into multi-DCI-based NCJT and single-DCI-based NCJT.

In the NCJT, two TRPs usually participate in transmission. As shown in (a) in FIG. 2, in the multi-DCI-based NCJT, a TRP 0 and a TRP 1 may respectively send DCI 0 and DCI 1 to a terminal device, to respectively schedule a PDSCH 0 and a PDSCH 1. In other words, the TRP 0 may send the PDSCH 0 to the terminal device, and the TRP 1 may send the PDSCH 1 to the terminal device.

As shown in (b) in FIG. 2, in the single-DCI-based NCJT, one of the TRP 0 and the TRP 1 (the TRP 0 is used as an example) sends DCI to the terminal device, and the DCI schedules one PDSCH. Data at some layers of the PDSCH is sent by one of the two TRPs, and data at the other layers is sent by the other of the two TRPs.

3. Channel state information (channel state information, CSI) measurement:

In an earlier release of NR (for example, Release 15 or Release 16), CSI measurement is performed based on a single-TRP CSI measurement hypothesis. That is, when a terminal device performs CSI measurement, it is hypothesized that subsequent data is from one TRP.

Before the measurement, a network device may configure, for the terminal device, a resource (referred to as a channel measurement resource) used for channel measurement and a CSI interference measurement (interference measurement) resource (namely, a CSI-IM resource). Each channel measurement resource may be associated with one CSI-IM resource.

For example, the CSI-IM resource may be a zero power (zero power, ZP) CSI-RS resource. On the CSI-IM resource, a serving cell sends a zero-power CSI-RS (which may be understood as sending no signal), and the terminal device measures noise and interference of an interfering cell on the ZP CSI-RS resource.

Then, the network device sends a reference signal (reference signal, RS) on the channel measurement resource, for example, a non-zero power (non-zero power, NZP) channel state information-reference signal (channel state information-reference signal, CSI-RS). The terminal device receives the reference signal on the channel measurement resource to perform channel estimation. In addition, the terminal device may further receive a signal on the CSI-IM resource associated with the channel measurement resource, to perform interference measurement.

The terminal device may determine the CSI based on a channel measurement result obtained on the channel measurement resource and an interference measurement result obtained on the CSI-IM resource associated with the channel measurement resource, and send the CSI to the network device through an uplink channel. The network device may perform scheduling based on the CSI.

For example, the CSI may include one or more of a precoding matrix indicator (pre-coding matrix indicator, PMI), a channel quality indicator (channel quality indicator, CQI), a rank indicator (rank indicator, RI), and a layer indicator (layer indicator, LI).

When the network device configures a plurality of channel measurement resources and CSI-IM resources associated with the plurality of channel measurement resources, the terminal device may perform measurement on the plurality of channel measurement resources and the CSI-IM resources associated with the plurality of channel measurement resources, to derive a plurality of pieces of CSI. Subsequently, one piece of CSI may be selected from the plurality of pieces of CSI and reported to the network device. In this scenario, the terminal device may further send channel measurement resource indication information to the network device, to indicate a channel measurement resource based on which the CSI reported by the terminal device is derived.

After the NCJT is introduced, an early CSI measurement configuration cannot well support a measurement requirement of the NCJT. Therefore, in Release 17, a CSI measurement-related configuration and implementation are enhanced, to support an NCJT CSI measurement hypothesis. The NCJT measurement hypothesis is a hypothesis that subsequent data of the terminal device is from two TRPs during measurement.

After the measurement configuration is enhanced, the network device may configure at least one CSI-RS resource set (resource set) for the terminal device. Two resource groups (resource group) are configured in each resource set, and includes $K_1$ and $K_2$ channel measurement resources respectively. Channel measurement resources in each resource group are associated with a same TRP.

In addition, $N$ ($N \leq 2$) resource pairs (resource pair) are configured in each resource set, and each resource pair includes channel measurement resources in two resource groups. Each resource pair is associated with one CSI-IM resource. For example, as shown in FIG.

3, $K_1$=4, $K_2$=2, a channel measurement resource is briefly referred to a CMR. The network device may configure a CMR 1, a CMR 3, a CMR 5, and a CMR 6 to belong to a resource group 0 and be associated with a TRP 0, and configure a CMR 2 and a CMR 4 to belong to a resource group 1 and be associated with a TRP 1. In addition, the CMR 1 and the CMR 2 form a resource pair 1, and the CMR 3 and the CMR 4 form a resource pair 2.

For the NCJT, the terminal device may receive a reference signal on each resource pair for channel estimation, and receive a signal on a CSI-IM resource associated with the resource pair for interference measurement, to derive two pieces of NCJT CSI. For a single-TRP CSI measurement hypothesis, the terminal device may perform measurement on one CMR to derive CSI, or may perform measurement on one CMR and a CSI-IM resource associated with the CMR to derive CSI.

After the CJT is introduced, Release 18 requires support for a maximum of four TRPs for CJT transmission. For example, a maximum quantity of coordinated TRPs configured by the network device for the terminal device is equal to 4. There are

$$C_4^1 + C_4^2 + C_4^3 + C_4^4 = 15$$ possible cases for the TRP actually used to transmit data to the terminal device subsequently: $C_4^1 = 4$ single-TRP transmission cases, $C_4^2 = 6$ transmission cases in which two TRPs are used, $C_4^3 = 4$ CJT transmission cases in which three TRPs are used, and $C_4^4 = 1$ CJT transmission case in which four TRPs are used.

It can be learned that, compared with the NCJT, transmission cases after the CJT is introduced are more complex. Therefore, a current measurement resource configuration is not applicable anymore. Based on this, this application provides a measurement resource configuration method, so that a measurement resource can be properly configured for the terminal device in a scenario in which CJT is introduced.

The technical solutions provided in this application are applicable to various communication systems. The communication system may be a 3rd generation partnership project (3rd generation partnership project, 3GPP) communication system, for example, a 4th generation (4th generation, 4G) long term evolution (long term evolution, LTE) system, an LTE-advance (LTE-Advanced, LTE-A) system, a 5th generation (5th generation, 5G) NR system, a vehicle to everything (vehicle to everything, V2X) system, an LTE-NR hybrid networking system, a device-to-device (device-to-device, D2D) system, a machine-to-machine (machine-to-machine, M2M) communication system, the internet of things (internet of things, IoT), another next-generation communication system, or the like. Alternatively, the communication system may be a non-3GPP communication system. This is not limited.

The foregoing communication systems to which this application is applicable are merely examples for description, and communication systems to which this application is applicable are not limited thereto. This is uniformly described herein. Details are not described below again.

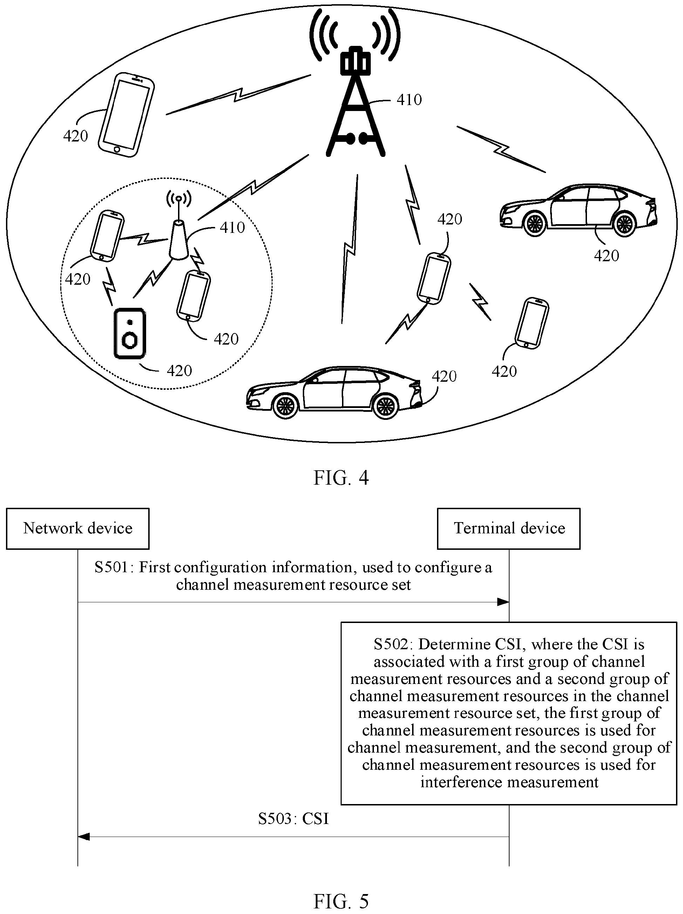

FIG. 4 is a diagram of a structure of a possible communication system according to this application. In FIG. 4, an example in which the communication system includes at least one network device 410 and at least one terminal device 420 connected to the network device 410 is used for description. It should be understood that, a quantity of terminal devices and a quantity of network devices in FIG. 4 are merely examples, and there may be more or fewer terminal devices and more or fewer network devices.

Optionally, the network device 410 in embodiments of this application is a device that enables the terminal device 420 to access a wireless network. The network device 410 may be a node in a radio access network, may be referred to as a base station, or may be referred to as a radio access network (radio access network, RAN) node (or device).

For example, the network device may include an evolved NodeB (NodeB or eNB or e-NodeB, evolutional NodeB) in an LTE system or an LTE-A system, for example, a conventional macro base station eNB and a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in an NTN, to be specific, may be deployed on a high-altitude platform or a satellite. In the NTN, the network device may serve as a layer 1 (L1) relay (relay), may serve as a base station, may serve as a DU, or may serve as an integrated access and backhaul (integrated access and backhaul, IAB) node. Alternatively, the network device may be a device that implements a base station function in IoT, for example, a device that implements a base station function in V2X, D2D, or machine-to-machine (machine-to-machine, M2M). This is not limited in embodiments of this application.

Optionally, the base station in embodiments of this application may include various forms of base stations, for example, a macro base station, a micro base station (or referred to as a small cell), a relay station, an access point, a home base station, a TRP, a transmitting point (transmitting point, TP), a mobile switching center, or the like. This is not specifically limited in embodiments of this application.

Optionally, the terminal device 420 in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

With reference to the accompanying drawings, the following describes the method provided in embodiments of this application. It may be understood that in embodiments of this application, the network device or the terminal device may perform some or all of the steps in embodiments of this application, and these steps or operations are merely examples. In embodiments of this application, another operation or various operation variations may further be performed. In addition, the steps may be performed in a sequence different from a sequence presented in embodiments of this application, and not all the operations in embodiments of this application may be performed.

For example, a method provided in the following embodiments of this application is applicable to a scenario in which CJT is introduced. Certainly, an application scenario of this application is merely described herein as an example. The application scenario imposes no limitation on this application. An application scenario of the method provided below is not specifically limited in this application either. For example, the method may be further used in another scenario in which a plurality of TRPs are introduced to simultaneously send data to the terminal device.

FIG. 5 shows a measurement resource configuration method according to this application. The measurement resource configuration method includes the following steps.

S501: A network device sends first configuration information to a terminal device. Correspondingly, the terminal device receives the first configuration information from the network device.

The first configuration information is used to configure a channel measurement resource set. The channel measurement resource set includes M channel measurement resources, and M is a positive integer. For example, M may be equal to 4, 3, or 2. A value of M is not specifically limited in this application.

For example, the channel measurement resource may be understood as a resource for channel measurement (resourceForChannelMeasurement). Channel measurement may be understood as channel estimation or the like.

In this application, the channel measurement resource may also be referred to as a reference signal resource, and the channel measurement resource and the reference signal resource may be replaced with each other. In addition, the channel measurement resource may be, for example, an NZP CSI-RS resource.

Optionally, the first configuration information may be carried in a CSI resource configuration (CSI-ResourceConfig) information element. An identifier of the CSI resource configuration information element may be carried in a resource for channel measurement (resourceForChannelMeasurement) information element in a CSI reporting configuration (CSI-reportConfig).

In a possible implementation, the M channel measurement resources included in the channel measurement resource set may be a subset of K channel measurement resources configured by the network device, where K is a positive integer greater than M. For example, the network device may configure the K channel measurement resources, and the network device may configure the M channel measurement resources in the K channel measurement resources as a resource set or a resource group. In this resource configuration form, it may be implicitly indicated that the M channel measurement resources are used in a CJT scenario.

For example, assuming that K is equal to 6 and M is equal to 4, the network device may configure six channel measurement resources in total for the terminal device: a CMR 1, a CMR 2, a CMR 3, a CMR 4, a CMR 5 and a CMR 6. In addition, the network device may configure the CMR 1, the CMR 2, the CMR 3, and the CMR 4 as a resource set or a resource group, to be used in the CJT scenario.

In another possible implementation, the network device may configure the M channel measurement resources by using the first configuration information, and use the first configuration information to carry a flag bit, to indicate that the M channel measurement resources are used in the CJT scenario.

For example, M is equal to 4, and the network device may configure the CMR 1, the CMR 2, the CMR 3, and the CMR 4 for the terminal device. In addition, the flag bit is carried in the first configuration information, and indicates that the CMR 1, the CMR 2, the CMR 3, and the CMR 4 are used in the CJT scenario.

Optionally, each of the M channel measurement resources is associated with one TRP or TRP group. That is, the M channel measurement resources are associated with M TRPs or M TRP groups. Different channel measurement resources are associated with different TRPs or TRP groups. The M TRPs or TRP groups associated with the M channel measurement resources may be understood as TRPs that can be used for CJT transmission and that are configured by the network device. A TRP group may include one or more TRPs. In the following embodiment of this application, an example in which the M channel measurement resources are associated with M TRPs or M TRP groups, and the TRP group includes one TRP is used for description.

S502: The terminal device determines CSI.

The CSI is associated with a first group of channel measurement resources and a second group of channel measurement resources in the channel measurement resource set. The first group of channel measurement resources is different from the second group of channel measurement resources.

Optionally, that the CSI is associated with the first group of channel measurement resources and the second group of channel measurement resources may be understood as: The CSI is derived based on measurement on the first group of channel measurement resources and the second group of channel measurement resources.

Optionally, that the terminal device determines the CSI may include: The terminal device derives (derive) the CSI. For example, the terminal device may perform measurement on the first group of channel measurement resources and the second group of channel measurement resources to derive the CSI.

The first group of channel measurement resources is used for channel measurement. For example, the terminal device performs channel estimation on the first group of channel measurement resources.

The second group of channel measurement resources is used for interference measurement. For example, the terminal device performs interference measurement on the second group of channel measurement resources. In other words, the terminal device may perform interference measurement by using a resource originally used for channel measurement.

Optionally, a total quantity M1 of channel measurement resources included in the first group of channel measurement resources may be configured by the network device, or may be determined by the terminal device. M1 may be less than M. The channel measurement resource specifically included in the first group of channel measurement resources may be selected by the terminal device.

For example, the M channel measurement resources in the channel measurement resource set are the CMR 1, the CMR 2, the CMR 3, and the CMR 4, and M1 is equal to 2. The terminal device may select the CMR 1 and the CMR 3 to form the first group of channel measurement resources. Certainly, the terminal device may alternatively select other CMRs to form the first group of channel measurement resources.

Optionally, a TRP that is associated with the first group of channel measurement resources and that is selected by the terminal device may be understood as a TRP that is selected by the terminal device for subsequently sending data to the terminal device. When M1 is greater than 1, the TRPs associated with the first group of channel measurement resources may be understood as TRPs that actually participate in CJT transmission subsequently.

For a total quantity M2 of channel measurement resources included in the second group of channel measurement resources, in a possible implementation, a sum of M2 and M1 may be equal to M. That is, the second group of channel measurement resources may include all channel measurement resources other than the first group of channel measurement resources in the channel measurement resource set.

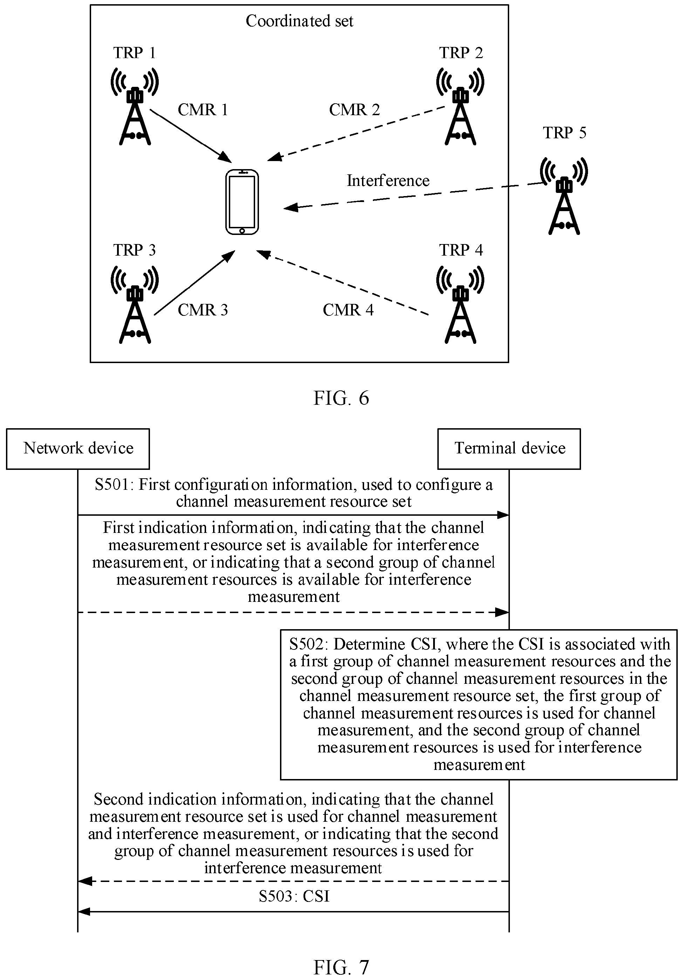

For example, as shown in FIG. 6, the M channel measurement resource sets in the channel measurement resource set are the CMR 1, the CMR 2, the CMR 3, and the CMR 4, and are respectively associated with a TRP 1, a TRP 2, a TRP 3, and a TRP 4. Assuming that the terminal device selects the CMR 1 and the CMR 3 to form the first group of channel measurement resources, the second group of channel measurement resources may include the CMR 2 and the CMR 4. In other words, the terminal device may perform channel measurement on the CMR 1 and the CMR 3, and perform interference measurement on the CMR 2 and the CMR 4.

In another possible implementation, a sum of M2 and M1 may also be less than M. That is, the second group of channel measurement resources may include a part of channel measurement resources other than the first group of channel measurement resources in the channel measurement resource set. For example, when the terminal device selects the CMR 1 and the CMR 3 to form the first group of channel measurement resources, the second group of channel measurement resources may include only the CMR 2, or include only the CMR 4. In other words, the terminal device may perform channel measurement on the CSR 1 and the CMR 3, and perform interference measurement on the CMR 2; or the terminal device may perform channel measurement on the CSR 1 and the CMR 3, and perform interference measurement on the CMR 4.

Optionally, when the M channel measurement resources included in the channel measurement resource set are used in the CJT scenario, the M TRPs associated with the M channel measurement resources may be understood as TRPs in a same coordinated set. When the terminal device (denoted as a terminal device A) selects M1 TRPs for subsequent data transmission, remaining TRPs may be used to send data to another terminal device. In this case, data sending of the remaining TRPs causes interference to the terminal device A. Therefore, interference measurement performed by the terminal device A on the second group of channel measurement resources may be understood as measurement of interference caused by a TRP associated with the second group of channel measurement resources to the terminal device A. Because the TRP associated with the second group of channel measurement resources and the TRP associated with the first group of channel measurement resources belong to a same coordinated set, interference measurement on the second group of channel measurement resources may also be understood as interference measurement in the coordinated set.

The foregoing uses an example in which the total quantity M1 of channel measurement resources in the first group of channel measurement resource groups is less than the total quantity M of channel measurement resources in the channel measurement resource set for description. Certainly, M1 may also be equal to M. To be specific, the terminal device selects the TRPs associated with all the channel measurement resources in the channel measurement resource set to perform subsequent CJT transmission, or the network device specifies the TRPs associated with all the channel measurement resources in the channel measurement resource set to perform subsequent CJT transmission. In this scenario, it may be considered that the second group of channel measurement resources does not exist.

In some embodiments, as shown in FIG. 7, before step S502, the network device may further send first indication information to the terminal device. Correspondingly, the terminal device receives the first indication information from the network device.

In a possible implementation, the first indication information indicates whether the channel measurement resource set is available for interference measurement. For example, the first indication information may be a 1-bit indicator (indicator). When the bit is set to "1 (or 0)", it indicates that the channel measurement resource set is available for interference measurement. When the bit is set to "0 (or 1)", it indicates that the channel measurement resource set is unavailable for interference measurement. This application is described by using an example in which the first indication information indicates that the channel measurement resource set is available for interference measurement.

Optionally, that the channel measurement resource set is available for interference measurement may be understood as: All channel measurement resources in the channel measurement resource set is available for interference measurement. That the channel measurement resource set is unavailable for interference measurement may be understood as: None of channel measurement resources in the channel measurement resource set is available for interference measurement.

In another possible implementation, the first indication information may indicate whether each channel measurement resource in the channel measurement resource set is available for interference measurement.

For example, the first indication information may be a bitmap (bitmap) including M bits. The M bits are in one-to-one correspondence with the M channel measurement resources in the channel measurement resource set. When a bit is set to "1 (or 0)", it indicates that a channel measurement resource corresponding to the bit is available for interference measurement. When a bit is set to "0 (or 1)", it indicates that a channel measurement resource corresponding to the bit is unavailable for interference measurement. When the second group of channel measurement resources is used for interference measurement, the first indication information indicates that the second group of channel measurement resources is available for interference measurement.

In some other embodiments, as shown in FIG. 7, the terminal device may send second indication information to the network device. Correspondingly, the network device receives the second indication information from the terminal device.

In a possible implementation, the second indication information indicates whether the channel measurement resource set is used for channel measurement and interference measurement. When the terminal device uses the second group of channel measurement resources to perform interference measurement, or the second group of channel measurement resources is used for interference measurement, the second indication information indicates that the channel measurement resource set is used for channel measurement and interference measurement.

For example, the second indication information may be a 1-bit indicator (indicator). When the bit is set to "1 (or 0)", it indicates that the channel measurement resource set is used for channel measurement and interference measurement. When the bit is set to "0 (or 1)", it indicates that the channel measurement resource set is used for channel measurement but not used for interference measurement.

In another possible implementation, the second indication information indicates whether the second group of channel measurement resources is used for interference measurement. When the terminal device performs interference measurement by using the second group of channel measurement resources, the second indication information indicates that the second group of channel measurement resources is used for interference measurement.

For example, the second indication information may be a bitmap including M bits. The M bits are in one-to-one correspondence with the M channel measurement resources in the channel measurement resource set. When a bit is set to "1 (or 0)", it indicates that a channel measurement resource corresponding to the bit is used for interference measurement. When a bit is set to "0 (or 1)", it indicates that a channel measurement resource corresponding to the bit is not used for interference measurement.

S503: The terminal device sends the CSI to the network device. Correspondingly, the network device receives the CSI from the terminal device.

In some embodiments, the CSI may include first CSI and difference information. In a possible implementation, the first CSI is associated with the first group of channel measurement resources, the difference information indicates a difference between the first CSI and second CSI, and the second CSI is associated with the first group of channel measurement resources and the second group of channel measurement resources.

For example, the terminal device may perform channel measurement on the first group of channel measurement resources to derive the first CSI. In addition, the terminal device further performs interference measurement on the second group of channel measurement resources, and derives the second CSI with reference to a channel measurement result and an interference measurement result. Then, the terminal device may derive the difference information based on the first CSI and the second CSI.

In another possible implementation, the first CSI is associated with the first group of channel measurement resources and the second group of channel measurement resources, the difference information indicates a difference between the first CSI and second CSI, and the second CSI is associated with the first group of channel measurement resources.

For example, the terminal device may perform channel measurement on the first group of channel measurement resources to derive the second CSI. In addition, the terminal device further performs interference measurement on the second group of channel measurement resources, and derives the first CSI with reference to a channel measurement result and an interference measurement result. Then, the terminal device may derive the difference information based on the first CSI and the second CSI.

In some other embodiments, the CSI may include the first CSI and the second CSI. The first CSI is associated with the first group of channel measurement resources, and the second CSI is associated with the first group of channel measurement resources and the second group of channel measurement resources.

In some other embodiments, the CSI may include only CSI derived with reference to a channel measurement result and an interference measurement result.

Optionally, the first CSI or the second CSI may include one or more of a PMI, a CQI, an RI, and an LI.

Optionally, the terminal device may further send third indication information to the network device. Correspondingly, the network device receives the third indication information from the terminal device. The third indication information may indicate the first group of channel measurement resources, or indicate the TRP associated with the first group of channel measurement resources, so that the network device learns of the TRP selected by the terminal device, and subsequently sends data to the terminal device through the TRP. For example, the third indication information may be referred to as a CSI-RS resource indicator (CSI-RS resource indicator).

Optionally, the third indication information may be included in the CSI as a part of the CSI; or the third indication information may not be included in the CSI. When the third indication information is included in the CSI, the third indication information and the CSI may be carried in same signaling; or the third information and the CSI may be carried in different signaling. This is not specifically limited in this application.

Optionally, when the terminal device sends the third indication information, the second indication information may be a bitmap including M-M1 bits. The M-M1 bits are in one-to-one correspondence with M-M1 channel measurement resources other than the first group of channel measurement resources in the channel measurement resource set. When a bit is set to "1 (or 0)", it indicates that a channel measurement resource corresponding to the bit is used for interference measurement. When a bit is set to "0 (or 1)", it indicates that a channel measurement resource corresponding to the bit is not used for interference measurement.

Based on this solution, for the M channel measurement resources configured by the network device, the terminal device may perform channel measurement by using the first group of channel measurement resources, perform interference measurement by using the second group of channel measurement resources, and report the CSI related to channel measurement and interference measurement to the network device. That is, the terminal device considers interference in a same resource set when determining the CSI, so that accuracy of the CSI can be improved. In this way, the network device can subsequently perform proper scheduling based on the CSI, and impact of the TRP associated with the second group of channel measurement resources in the resource set on CJT transmission is reduced. In addition, the network device does not need to additionally configure a resource used for interference measurement in the coordinated set. This can reduce resource overheads.

In some embodiments, the measurement resource configuration method provided in this application may further include: The network device sends second configuration information to the terminal device. Correspondingly, the terminal device receives the second configuration information from the network device.

The second configuration information is used to configure one interference measurement resource associated with the channel measurement resource set. Alternatively, the second configuration information is used to configure one interference measurement resource set associated with the channel measurement resource set. The interference measurement resource set may include one interference measurement resource. That is, the interference measurement resource set includes only one interference measurement resource.

Optionally, the interference measurement resource may be a CSI-IM resource. The interference measurement resource is used to measure interference and noise that are caused by a TRP outside the coordinated set to the terminal device. For example, based on the example shown in FIG. 6, TRPs in the coordinated set include the TRP 1, the TRP 2, the TRP 3, and the TPR 4. In this case, the interference measurement resource may be used to measure interference on the terminal device by a TRP 5 outside the coordinated set.

Optionally, when the network device configures the interference measurement resource, the CSI in step S502 may be further associated with the interference measurement resource. That is, the terminal device may further measure, on the interference measurement resource, interference outside the coordinated set, and determine the CSI with reference to the interference measurement result.

In NCJT measurement, each resource pair is associated with one CSI-IM resource. In the CJT scenario, assuming that the network device configures a maximum of four TRPs to send data to the terminal device, there are a total of

$$C_4^1 + C_4^2 + C_4^3 + C_4^4 = 15$$

transmission cases. When the terminal device performs measurement, there are also 15 measurement hypotheses: $C_4^1 = 4$ single-TRP measurement hypotheses, $C_4^2 = 6$ measurement hypotheses for CJT using two TRPs, $C_4^3 = 4$ measurement hypotheses for CJT using three TRPs, and $C_4^4 = 1$ measurement hypothesis for CJT using four TRPs.

In the CJT scenario, if one CSI-IM resource is configured for each measurement hypothesis with reference to CSI-IM resource configuration of NCJT, to measure interference of a cell outside the coordinated set, the network device needs to configure 15 CSI-IM resources, and resource insufficiency is likely to occur.

Based on the foregoing solution of this application, the network device configures one associated interference measurement resource for the channel measurement resource set. For various measurement hypotheses of the terminal device, the interference measurement resource may be used to perform interference measurement on a cell outside the coordinated set, so that overheads of the interference measurement resource can be greatly reduced.

It may be understood that, in the foregoing embodiments, the method and/or the steps implemented by the network device may alternatively be implemented by a part (for example, a processor, a chip, a chip system, a circuit, a logical module, or software) that can be used in the network device, and the method and/or the steps implemented by the terminal device may alternatively be implemented by a part (for example, a processor, a chip, a chip system, a circuit, a logical module, or software) that can be used in the terminal device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

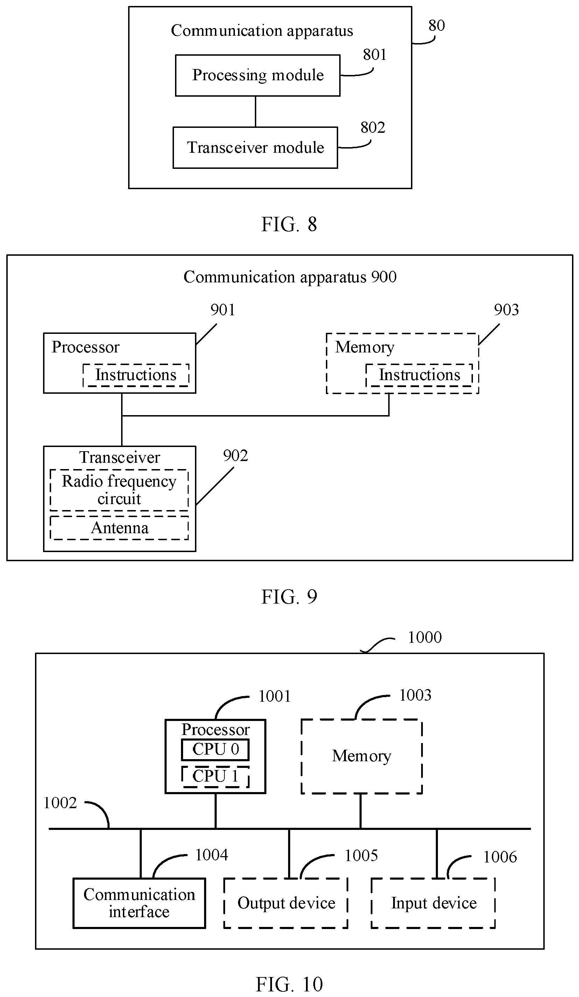

FIG. 8 of a communication apparatus is a diagram of a structure of a communication apparatus 80. The communication apparatus 80 includes a processing module 801 and a transceiver module 802. The communication apparatus 80 may be configured to implement a function of the network device or the terminal device.

In some embodiments, the communication apparatus 80 may further include a storage module (not shown in FIG. 8), configured to store program instructions and data.

In some embodiments, the transceiver module 802 may also be referred to as a transceiver unit, configured to implement a sending function and/or a receiving function. The transceiver module 802 may include a transceiver circuit, a transceiver machine, a transceiver, or a communication interface.

In some embodiments, the transceiver module 802 may include a receiving module and a sending module, respectively configured to perform receiving steps and sending steps performed by the network device or the terminal device in the foregoing method embodiment, and/or configured to support another process of the technology described in this specification. The processing module 801 may be configured to perform processing (for example, determining and generating) steps performed by the network device or the terminal device in the foregoing method embodiment, and/or configured to support another process of the technology described in this specification.

When the communication apparatus 80 is configured to implement a function of the terminal device, the transceiver module 802 is configured to receive first configuration information from a network device. The first configuration information is used to configure a channel measurement resource set, the channel measurement resource set includes M channel measurement resources, and M is a positive integer. The processing module 801 is configured to determine channel state information CSI. The CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources. The transceiver module 802 is further configured to send the CSI to the network device.

Optionally, the transceiver module 802 is further configured to receive first indication information from the network device. The first indication information indicates that the channel measurement resource set is available for interference measurement; or the first indication information indicates that the second group of channel measurement resources is available for interference measurement.

Optionally, the transceiver module 802 is further configured to send second indication information to the network device. The second indication information indicates that the channel measurement resource set is used for channel measurement and interference measurement; or the second indication information indicates that the second group of channel measurement resources is used for interference measurement.

Optionally, the CSI includes first CSI and difference information. The first CSI is associated with the first group of channel measurement resources, the difference information indicates a difference between the first CSI and second CSI, and the second CSI is associated with the first group of channel measurement resources and the second group of channel measurement resources. Alternatively, the first CSI is associated with the first group of channel measurement resources and the second group of channel measurement resources, the difference information indicates a difference between the first CSI and second CSI, and the second CSI is associated with the first group of channel measurement resources.

Optionally, the transceiver module 802 is further configured to receive second configuration information from the network device. The second configuration information is used to configure one interference measurement resource associated with the channel measurement resource set, or the second configuration information is used to configure one interference measurement resource set associated with the channel measurement resource set.

Optionally, the interference measurement resource set includes one interference measurement resource.

Optionally, the interference measurement resource is a channel state information-interference measurement CSI-IM resource.

Optionally, the CSI is further associated with the interference measurement resource or the interference measurement resource set.

When the communication apparatus 80 is configured to implement a function of the network device, the processing module 801 is configured to determine first configuration information. The transceiver module 802 is configured to send the first configuration information to a terminal device. The first configuration information is used to configure a channel measurement resource set, the channel measurement resource set includes M channel measurement resources, and M is a positive integer. The transceiver module 802 is further configured to receive channel state information CSI from the terminal device. The CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources.

Optionally, the transceiver module 802 is further configured to send first indication information to the terminal device. The first indication information indicates that the channel measurement resource set is available for interference measurement; or the first indication information indicates that the second group of channel measurement resources is available for interference measurement.

Optionally, the transceiver module 802 is further configured to receive second indication information from the terminal device. The second indication information indicates that the channel measurement resource set is used for channel measurement and interference measurement; or the second indication information indicates that the second group of channel measurement resources is used for interference measurement.

Optionally, the CSI includes first CSI and difference information. The first CSI is associated with the first group of channel measurement resources, the difference information indicates a difference between the first CSI and second CSI, and the second CSI is associated with the first group of channel measurement resources and the second group of channel measurement resources. Alternatively, the first CSI is associated with the first group of channel measurement resources and the second group of channel measurement resources, the difference information indicates a difference between the first CSI and second CSI, and the second CSI is associated with the first group of channel measurement resources.

Optionally, the transceiver module 802 is further configured to send second configuration information to the terminal device. The second configuration information is used to configure one interference measurement resource associated with the channel measurement resource set, or the second configuration information is used to configure one interference measurement resource set associated with the channel measurement resource set.

Optionally, the interference measurement resource set includes one interference measurement resource.

Optionally, the interference measurement resource is a channel state information-interference measurement CSI-IM resource.

Optionally, the CSI is further associated with the interference measurement resource or the interference measurement resource set.

All related content of the steps in the foregoing method embodiment may be cited in function descriptions of the corresponding functional modules. Details are not described herein again.

In this application, the communication apparatus 80 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 80 in FIG. 8 is a chip or a chip system, a function/implementation process of the transceiver module 802 may be implemented by using an input/output interface (or a communication interface) of the chip or the chip system, and a function/implementation process of the processing module 801 may be implemented by using a processor (or a processing circuit) of the chip or the chip system.

The communication apparatus 80 provided in this embodiment may perform the foregoing method.

Therefore, for technical effects that can be achieved by the communication apparatus 80, refer to the foregoing method embodiment. Details are not described herein again.

In a possible product form, the terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the terminal device or the network device in embodiments of this application may be implemented by using a general bus architecture. For ease of description, refer to FIG. 9. FIG. 9 is a diagram of a structure of a communication apparatus 900 according to an embodiment of this application. The communication apparatus 900 includes a processor 901 and a transceiver 902. The communication apparatus 900 may be a network device, or a chip or a chip system in the network device. Alternatively, the communication apparatus 900 may be a terminal device, or a chip or a module in the terminal device. FIG. 9 shows only main components of the communication apparatus 900. In addition to the processor 901 and the transceiver 902, the communication apparatus may further include a memory 903 and an input/output apparatus (not shown in the figure).

Optionally, the processor 901 is mainly configured to: process a communication protocol and communication data, control the entire communication apparatus, execute a software program, and process data of the software program. The memory 903 is mainly configured to store the software program and the data. The transceiver 902 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 901, the transceiver 902, and the memory 903 may be connected through a communication bus.

After the communication apparatus is powered on, the processor 901 may read the software program from the memory 903, interpret and execute instructions of the software program, and process data of the software program. When data needs to be sent wirelessly, the processor 901 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 901. The processor 901 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 80 may be in a form of the communication apparatus 900 shown in FIG. 9.

In an example, the functions/implementation processes of the processing module 801 in FIG. 8 may be implemented by the processor 901 in the communication apparatus 900 shown in FIG. 9 by invoking the computer-executable instructions stored in the memory 903. The function/implementation process of the transceiver module 802 in FIG. 8 may be implemented by the transceiver 902 in the communication apparatus 900 shown in FIG. 9.

In still another possible product form, the network device or the terminal device in this application may use a composition structure shown in FIG. 10, or include components shown in FIG. 10. FIG. 10 is a diagram of composition of a communication apparatus 1000 according to this application. The communication apparatus 1000 may be a terminal device, or a chip or a system-on-a-chip in the terminal device, or may be a network device, or a module, a chip, or a system-on-a-chip in the network device.

As shown in FIG. 10, the communication apparatus 1000 includes at least one processor 1001 and at least one communication interface (in FIG. 10, only an example in which one communication interface 1004 and one processor 1001 are included is used for description). Optionally, the communication apparatus 1000 may further include a communication bus 1002 and a memory 1003.

The processor 1001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1001 may alternatively be another apparatus having a processing function, for example, a circuit, a component, or a software module. This is not limited.

The communication bus 1002 is configured to connect different components in the communication apparatus 1000, so that the different components can communicate with each other. The communication bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

The communication interface 1004 is configured to communicate with another device or a communication network. For example, the communication interface 1004 may be a module, a circuit, a transceiver, or any apparatus that can implement communication. Optionally, the communication interface 1004 may alternatively be an input/output interface located in the processor 1001, and is configured to implement signal input and signal output of the processor.

The memory 1003 may be an apparatus having a storage function, and is configured to store instructions and/or data. The instructions may be a computer program.

For example, the memory 1003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1003 may be independent of the processor 1001, or may be integrated with the processor 1001. The memory 1003 may be located inside the communication apparatus 1000, or may be located outside the communication apparatus 1000. This is not limited. The processor 1001 may be configured to execute the instructions stored in the memory 1003, to implement a method provided in the following embodiments of this application.

In an optional implementation, the communication apparatus 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may receive an input from a user in a plurality of manners. For example, the input device 1006 may be a mouse, a keyboard, a touchscreen device, or a sensor device.

In some embodiments, in hardware implementation, a person skilled in the art may figure out that the communication apparatus 80 shown in FIG. 8 may be in a form of the communication apparatus 1000 shown in FIG. 10.

In an example, the functions/implementation processes of the processing module 801 in FIG. 8 may be implemented by the processor 1001 in the communication apparatus 1000 shown in FIG. 10 by invoking the computer-executable instructions stored in the memory 1003. The function/implementation process of the transceiver module 802 in FIG. 8 may be implemented by the communication interface 1004 in the communication apparatus 1000 shown in FIG. 10.

It should be noted that the structure shown in FIG. 10 does not constitute a specific limitation on the network device or the terminal device. For example, in some other embodiments of this application, the network device or the terminal device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any foregoing method embodiment.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions in any foregoing method embodiment are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprise" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A measurement resource configuration method, wherein the method comprises:

receiving first configuration information from a network device, wherein the first configuration information is used to configure a channel measurement resource set, the channel measurement resource set comprises M channel measurement resources, and M is a positive integer; determining channel state information CSI, wherein the CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources; and
sending the CSI to the network device.

2. The method according to claim 1, wherein the method further comprises: receiving first indication information from the network device, wherein
the first indication information indicates that the channel measurement resource set is available for used for interference measurement; or the first indication information indicates that the second group of channel measurement resources is available for interference measurement.

3. The method according to claim 1 or 2, wherein the method further comprises: sending second indication information to the network device, wherein
the second indication information indicates that the channel measurement resource set is used for channel measurement and interference measurement; or the second indication information indicates that the second group of channel measurement resources is used for interference measurement.

4. The method according to any one of claims 1 to 3, wherein the CSI comprises first CSI and difference information;

the first CSI is associated with the first group of channel measurement resources, the difference information indicates a difference between the first CSI and second CSI, and the second CSI is associated with the first group of channel measurement resources and the second group of channel measurement resources; or
the first CSI is associated with the first group of channel measurement resources and the second group of channel measurement resources, the difference information indicates a difference between the first CSI and second CSI, and the second CSI is associated with the first group of channel measurement resources.

5. The method according to any one of claims 1 to 4, wherein the method further comprises: receiving second configuration information from the network device, wherein
the second configuration information is used to configure one interference measurement resource associated with the channel measurement resource set, or the second configuration information is used to configure one interference measurement resource set associated with the channel measurement resource set.

6. The method according to claim 5, wherein the interference measurement resource set consists of one interference measurement resource.

7. The method according to claim 5 or 6, wherein the interference measurement resource is a channel state information-interference measurement CSI-IM resource.

8. The method according to any one of claims 5 to 7, wherein the CSI is further associated with the interference measurement resource or the interference measurement resource set.

9. A measurement resource configuration method, wherein the method comprises:

sending first configuration information to a terminal device, wherein the first configuration information is used to configure a channel measurement resource set, the channel measurement resource set comprises M channel measurement resources, and M is a positive integer; and
receiving channel state information CSI from the terminal device, wherein the CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources.

10. The method according to claim 9, wherein the method further comprises: sending first indication information to the terminal device, wherein
the first indication information indicates that the channel measurement resource set is available for interference measurement; or the first indication information indicates that the second group of channel measurement resources is available for interference measurement.

**11.** The method according to claim 9 or 10, wherein the method further comprises: receiving second indication information from the terminal device, wherein the second indication information indicates that the channel measurement resource set is used for channel measurement and interference measurement; or the second indication information indicates that the second group of channel measurement resources is used for interference measurement.

**12.** The method according to any one of claims 9 to 11, wherein the CSI comprises first CSI and difference information;

the first CSI is associated with the first group of channel measurement resources, the difference information indicates a difference between the first CSI and second CSI, and the second CSI is associated with the first group of channel measurement resources and the second group of channel measurement resources; or the first CSI is associated with the first group of channel measurement resources and the second group of channel measurement resources, the difference information indicates a difference between the first CSI and second CSI, and the second CSI is associated with the first group of channel measurement resources.

**13.** The method according to any one of claims 9 to 12, wherein the method further comprises: sending second configuration information to the terminal device, wherein the second configuration information is used to configure one interference measurement resource associated with the channel measurement resource set, or the second configuration information is used to configure one interference measurement resource set associated with the channel measurement resource set.

**14.** The method according to claim 13, wherein the interference measurement resource set consists of one interference measurement resource.

**15.** The method according to claim 13 or 14, wherein the interference measurement resource is a channel state information-interference measurement CSI-IM resource.

**16.** The method according to any one of claims 13 to 15, wherein the CSI is further associated with the interference measurement resource or the interference measurement resource set.

**17.** A communication apparatus, wherein the communication apparatus comprises a transceiver module and a processing module;

the transceiver module is configured to receive first configuration information from a network device, wherein the first configuration information is used to configure a channel measurement resource set, the channel measurement resource set comprises M channel measurement resources, and M is a positive integer; the processing module is configured to determine channel state information CSI, wherein the CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources; and the transceiver module is further configured to send the CSI to the network device.

**18.** The communication apparatus according to claim 17, wherein the transceiver module is further configured to receive first indication information from the network device, wherein the first indication information indicates that the channel measurement resource set is available for interference measurement; or the first indication information indicates that the second group of channel measurement resources is available for interference measurement.

**19.** The communication apparatus according to claim 17 or 18, wherein the transceiver module is further configured to send second indication information to the network device, wherein the second indication information indicates that the channel measurement resource set is used for channel measurement and interference measurement; or the second indication information indicates that the second group of channel measurement resources is used for interference measurement.

**20.** The communication apparatus according to any one of claims 17 to 19, wherein the transceiver module is further configured to receive second configuration information from the network device, wherein the second configuration information is used to configure one interference measurement resource associated with the channel measurement resource set, or the second configuration information is used to configure one interference measurement resource set associated with the channel measurement resource set.

**21.** A communication apparatus, wherein the communication apparatus comprises a transceiver module;

the transceiver module is configured to send first configuration information to a terminal device, wherein the first configuration information is used to configure a channel measurement resource set, the channel measurement resource set comprises M channel measurement resources, and M is a positive integer; and

the transceiver module is further configured to receive channel state information CSI from the terminal device, wherein the CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources.

22. The communication apparatus according to claim 21, wherein the transceiver module is further configured to send first indication information to the terminal device, wherein

the first indication information indicates that the channel measurement resource set is available for interference measurement; or the first indication information indicates that the second group of channel measurement resources is available for interference measurement.

23. The communication apparatus according to claim 21 or 22, wherein the transceiver module is further configured to receive second indication information from the terminal device, wherein

the second indication information indicates that the channel measurement resource set is used for channel measurement and interference measurement; or the second indication information indicates that the second group of channel measurement resources is used for interference measurement.

24. The communication apparatus according to any one of claims 21 to 23, wherein the transceiver module is further configured to send second configuration information to the terminal device, wherein

the second configuration information is used to configure one interference measurement resource associated with the channel measurement resource set, or the second configuration information is used to configure one interference measurement resource set associated with the channel measurement resource set.

25. A communication apparatus, wherein the communication apparatus comprises a processor, and the processor is configured to run a computer program or instructions, to enable the communication apparatus to perform the method according to any one of claims 1 to 8.

26. A communication apparatus, wherein the communication apparatus comprises a processor, and the processor is configured to run a computer program or instructions, to enable the communication apparatus to perform the method according to any one of claims 9 to 16.

27. A computer-readable storage medium, wherein the computer-readable storage medium stores computer instructions or a program, and when the computer instructions or the program is run on a computer, the method according to any one of claims 1 to 8 is performed.

28. A computer-readable storage medium, wherein the computer-readable storage medium stores computer instructions or a program, and when the computer instructions or the program is run on a computer, the method according to any one of claims 9 to 16 is performed.

29. A computer program product, wherein the computer program product comprises computer instructions, and when a part or all of the computer instructions are run on a computer, the method according to any one of claims 1 to 8 is performed.

30. A computer program product, wherein the computer program product comprises computer instructions, and when a part or all of the computer instructions are run on a computer, the method according to any one of claims 9 to 16 is performed.

31. A communication system, wherein the communication system comprises a terminal device and a network device;

the network device is configured to send first configuration information to the terminal device, wherein the first configuration information is used to configure a channel measurement resource set, the channel measurement resource set comprises M channel measurement resources, and M is a positive integer;

the terminal device is configured to: receive the first configuration information from the network device, determine channel state information CSI, and send the CSI to the network device, wherein the CSI is associated with a first group of channel measurement resources and a second group of channel measurement resources in the channel measurement resource set, the first group of channel measurement resources is used for channel measurement, the second group of channel measurement resources is used for interference measurement, and the first group of channel measurement resources is different from the second group of channel measurement resources; and

the network device is further configured to receive the CSI from the terminal device.

32. The communication system according to claim 31, wherein

the network device is further configured to send first indication information to the terminal device, wherein the first indication information indicates that the channel measurement resource set is available for interference measurement, or the first indication information indicates that the second group of channel measurement resources is available for interference measurement; and

the terminal device is further configured to receive the first indication information from the network device.

33. The communication system according to claim 31 or 32, wherein

the terminal device is further configured to send second indication information to the network device, wherein the second indication information indicates that the channel measurement resource set is used for channel measurement and interference measurement, or the second indication information indicates that the second group of channel measurement resources is used for interference measurement; and

the network device is further configured to receive the second indication information from the terminal device.

34. The communication system according to any one of claims 31 to 33, wherein

the network device is further configured to send second configuration information to the terminal device, wherein the second configuration information is used to configure one interference measurement resource associated with the channel measurement resource set, or the second configuration information is used to configure one interference measurement resource set associated with the channel measurement resource set; and

the terminal device is further configured to receive the second configuration information from the network device.

TRP 0          TRP 1

DCI

PDSCH         PDSCH

$$W^{(0)}\begin{bmatrix} S_0 \\ S_1 \end{bmatrix}$$       $$W^{(1)}\begin{bmatrix} S_0 \\ S_1 \end{bmatrix}$$

FIG. 1

TRP 0     TRP 1     TRP 0     TRP 1

DCI 0 DCI 1      DCI

PDSCH 0   PDSCH 1   Some     The other
             layers of    layers of the
             a PDSCH    PDSCH

(a)             (b)

FIG. 2

| Resource group 0 | CMR 1 | CMR 3 | CMR 5 | CMR 6 |
| Resource group 1 | CMR 2 | CMR 4 | | |
| | Resource pair 1 | Resource pair 2 | | |

FIG. 3

FIG. 4

S501: First configuration information, used to configure a channel measurement resource set

S502: Determine CSI, where the CSI is associated with a first group of channel measurement resources and a second group of channel measurement resources in the channel measurement resource set, the first group of channel measurement resources is used for channel measurement, and the second group of channel measurement resources is used for interference measurement

S503: CSI

FIG. 5

Coordinated set

TRP 1

TRP 2

TRP 5

CMR 1

CMR 2

Interference

TRP 3

TRP 4

CMR 3

CMR 4

## FIG. 6

| Network device | | Terminal device |
|---|---|---|

S501: First configuration information, used to configure a channel measurement resource set

First indication information, indicating that the channel measurement resource set is available for interference measurement, or indicating that a second group of channel measurement resources is available for interference measurement

S502: Determine CSI, where the CSI is associated with a first group of channel measurement resources and the second group of channel measurement resources in the channel measurement resource set, the first group of channel measurement resources is used for channel measurement, and the second group of channel measurement resources is used for interference measurement

Second indication information, indicating that the channel measurement resource set is used for channel measurement and interference measurement, or indicating that the second group of channel measurement resources is used for interference measurement

S503: CSI

## FIG. 7

Communication apparatus 80

Processing module 801

Transceiver module 802

FIG. 8

Communication apparatus 900

Processor 901

Instructions

Memory 903

Instructions

Transceiver 902

Radio frequency circuit

Antenna

FIG. 9

1000

Processor 1001

CPU 0

CPU 1

Memory 1003

1002

Communication interface 1004

Output device 1005

Input device 1006

FIG. 10

## INTERNATIONAL SEARCH REPORT

| International application No. |
| --- |
| **PCT/CN2023/118102** |

| | |
| --- | --- |
| **A.** | **CLASSIFICATION OF SUBJECT MATTER** |

H04B 7/06(2006.01)i;  H04L 5/00(2006.01)i

According to International Patent Classification (IPC) or to both national classification and IPC

| | |
| --- | --- |
| **B.** | **FIELDS SEARCHED** |

Minimum documentation searched (classification system followed by classification symbols)

IPC: H04B H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 测量, 干扰, 联合, 配置, 确定, 相干, 信道, 资源, 信道状态, 集合, channel, CJT, CSI, IM, nCJT, measur+, configurat+, resource?, coherent joint transmission, interference, CMR

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | WO 2020034857 A1 (VIVO COMMUNICATION TECHNOLOGY CO., LTD.) 20 February 2020 (2020-02-20) description, pages 4-16 | 1-34 |
| A | CN 113810090 A (HUAWEI TECHNOLOGIES CO., LTD.) 17 December 2021 (2021-12-17) entire document | 1-34 |
| A | CN 115023906 A (QUALCOMM INC.) 06 September 2022 (2022-09-06) entire document | 1-34 |
| A | WO 2021059239 A1 (TELEFONAKTIEBOLAGET LM ERICSSON (PUBL)) 01 April 2021 (2021-04-01) entire document | 1-34 |
| A | HUAWEI et al. "CSI enhancement for coherent JT and mobility" *3GPP TSG-RAN WG1 Meeting #109-e R1-2203151*, 20 May 2022 (2022-05-20), entire document | 1-34 |

☐ Further documents are listed in the continuation of Box C.       ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 November 2023** | **20 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/118102**

| Patent document cited in search report | | | Publication date (day/month/year) | Patent family member(s) | | | Publication date (day/month/year) |
|---|---|---|---|---|---|---|---|
| WO | 2020034857 | A1 | 20 February 2020 | US | 2021167830 | A1 | 03 June 2021 |
| | | | | CN | 110831196 | A | 21 February 2020 |
| CN | 113810090 | A | 17 December 2021 | WO | 2021254305 | A1 | 23 December 2021 |
| | | | | EP | 4156540 | A1 | 29 March 2023 |
| CN | 115023906 | A | 06 September 2022 | WO | 2021155585 | A1 | 12 August 2021 |
| | | | | IN | 202227040683 | A | 23 September 2022 |
| | | | | EP | 4101090 | A1 | 14 December 2022 |
| WO | 2021059239 | A1 | 01 April 2021 | US | 2022407576 | A1 | 22 December 2022 |

Form PCT/ISA/210 (patent family annex) (July 2022)

**EP 4 572 173 A1**

**Patent documents cited in the description**

- CN 202211117025